(19) Europäisches Patentamt
European Patent Office
Office européen des brevets

(11) **EP 3 831 577 B1**

(12) **FASCICULE DE BREVET EUROPEEN**

(45) Date de publication et mention
de la délivrance du brevet:
**09.11.2022   Bulletin 2022/45**

(21) Numéro de dépôt: **20211748.7**

(22) Date de dépôt: **04.12.2020**

(51) Classification Internationale des Brevets (IPC):
**B29C 64/118** *(2017.01)*   **G01N 23/046** *(2018.01)*
**B22F 10/00** *(2021.01)*   **G01N 23/00** *(2006.01)*
**B22F 3/105** *(2006.01)*   **B33Y 50/02** *(2015.01)*
**B33Y 40/00** *(2020.01)*   **B33Y 10/00** *(2015.01)*
**B29C 64/393** *(2017.01)*   **B29C 64/194** *(2017.01)*
**B29C 64/153** *(2017.01)*   **B22F 10/38** *(2021.01)*
**B22F 10/50** *(2021.01)*   **B22F 10/85** *(2021.01)*
**B22F 12/90** *(2021.01)*

(52) Classification Coopérative des Brevets (CPC):
(C-Sets disponibles)
**B29C 64/118; B22F 10/38; B22F 10/50;
B22F 10/85; B22F 12/90; B29C 64/153;
B29C 64/194; B29C 64/393; B33Y 10/00;
B33Y 40/00; B33Y 50/02; G01N 23/046;**
B22F 2999/00; B33Y 30/00; G01N 2223/646;

(Cont.)

(54) **MÉTHODE ET SYSTÈME D'INSPECTION EN 3D D'UNE PIÈCE EN COURS DE FABRICATION PAR UN PROCESSUS DE TYPE ADDITIF**

VERFAHREN UND SYSTEM ZUR 3D-INSPEKTION EINES WERKSTÜCKS WÄHREND DER HERSTELLUNG DURCH EIN ADDITIVES VERFAHREN

METHOD AND SYSTEM FOR 3D INSPECTION OF A PART DURING MANUFACTURING BY AN ADDITIVE TYPE PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.12.2019   FR 1913847**

(43) Date de publication de la demande:
**09.06.2021   Bulletin 2021/23**

(73) Titulaire: **Commissariat à l'Energie Atomique et aux Energies Alternatives
75015 Paris (FR)**

(72) Inventeur: **COSTIN, Marius
91191 GIF SUR YVETTE CEDEX (FR)**

(74) Mandataire: **Atout PI Laplace
Immeuble "Visium"
22, avenue Aristide Briand
94117 Arcueil Cedex (FR)**

(56) Documents cités:
**EP-A1- 3 269 535      WO-A1-2018/234331
US-A1- 2019 193 156**

(52) Classification Coopérative des Brevets (CPC):
(Cont.)
Y02P 10/25

C-Sets
B22F 2999/00, B22F 10/38, B22F 12/90,
B22F 2202/11

**Description**

L'invention concerne le domaine de la fabrication additive de pièces par couches successives, en particulier les techniques de fusion sélective par laser ou « Selective Laser Melting » SLM, les techniques de dépôt de matière sous énergie concentrée ou « Directed Energy Déposition » DED, les techniques d'impression par dépôt de fil métallique ou « Wire Arc Additive Manufacturing » WAAM ou toute autre technique d'impression d'un objet par couches successives à partir d'un modèle numérique.

L'invention porte plus précisément sur une méthode et un système d'inspection d'une pièce en cours de fabrication, par imagerie radiographique.

Le terme de fabrication additive désigne l'ensemble des procédés permettant de fabriquer, couche par couche par ajout de matière, un objet physique à partir d'un objet défini via un modèle numérique. Ce terme regroupe de nombreuses technologies de fabrication parmi lesquelles on peut citer les méthodes de fusion sur lit de poudre, en particulier les méthodes utilisant une source laser telles que les méthodes SLM ou des méthodes par dépôt de matière ou de fil métallique telles que les méthodes DED ou WAAM.

Un des problèmes rencontrés lors d'un processus de fabrication additive concerne l'apparition de défauts ou des déviations entre la pièce réalisée et le modèle numérique CAO. Ces défauts peuvent correspondre à des porosités ou des fissures ou peuvent être liés à un manque ou à un surplus d'épaisseur lors de la fabrication d'une couche de l'objet.

En général, l'inspection d'une pièce pour rechercher d'éventuels défauts est réalisée sur la pièce finalisée une fois le processus de fabrication terminé.

Cette méthode présente l'inconvénient de ne pas toujours permettre la réparation de la pièce pour la rendre conforme au modèle numérique. Ainsi, la pièce est le plus souvent jugée non conforme et doit être fabriquée à nouveau.

Cet inconvénient est d'autant plus impactant que le processus de fabrication additive peut être long (parfois plus d'une dizaine d'heures) lorsque la pièce à fabriquer est une structure complexe et de grandes dimensions.

Les techniques connues de suivi de processus de fabrication sont notamment basées sur l'utilisation de caméras vision ou infra-rouge (ou caméras thermiques). Ces approches ne permettent pas d'imager ou d'inspecter les couches inférieures à la couche d'impression courante.

D'autres méthodes basées sur des ondes ultrasonores ou électromagnétiques sont en développement mais présentent également des limitations en termes d'accessibilité. La demande internationale WO 2018/234331 décrit par exemple une méthode d'inspection basée sur des ondes ultrasonores. La demande de brevet américaine US 2016/0339519 décrit une technique d'inspection basée sur des ondes électromagnétiques (courants de Foucault) qui est principalement adaptée aux aciers et ne peut pas fonctionner pour des pièces fabriquées dans des matériaux non-ferromagnétiques.

On connait par ailleurs la demande de brevet EP3323617 qui porte sur une méthode d'inspection de pièces obtenues par fabrication additive de type SLM.

La méthode proposée est basée sur une imagerie par rétrodiffusion en cours de fabrication de la pièce.

Cette méthode présente plusieurs inconvénients. Tout d'abord, elle présente une résolution spatiale faible. Elle est adaptée aux couches de fabrication minces ou à l'inspection surfacique d'une pièce mais présente des résultats insatisfaisants lorsqu'il s'agit d'imager une pièce en profondeur.

Cette méthode présente aussi une durée d'exécution importante du fait de la fraction réduite de photons qui subissent le phénomène de rétrodiffusion sur la pièce. En effet, le rendement, autrement dit le taux de photons réfléchis par rapport à la quantité de photons émise, est faible.

La méthode par rétrodiffusion proposée dans la demande EP3323617 présente aussi l'inconvénient d'être limitée à l'imagerie d'une zone de la pièce et de nécessiter plusieurs mesures avec différents positionnement de la source à rayons X par rapport à la pièce pour pouvoir imager l'ensemble de la pièce.

Par ailleurs, la méthode décrite dans la demande EP3323617 est applicable à différentes méthodes de fabrication additive et pas uniquement à la méthode SLM. Enfin, cette méthode ne permet pas une vérification de conformité de la pièce au modèle numérique.

On connait par ailleurs les méthodes d'imagerie décrites dans les documents EP3269535 et US2019/193156.

L'invention propose une nouvelle méthode d'inspection d'une pièce en cours de fabrication qui utilise une imagerie radiographique par rayons X, le faisceau de rayons étant transmis à travers la pièce et non rétrodiffusé comme dans la demande EP3323617.

L'invention présente notamment l'avantage d'être adaptée à divers types de matériaux et à diverses méthodes de fabrication additive. Elle permet, grâce à une technique de reconstruction d'une image 3D de la pièce, de pouvoir comparer cette reconstruction directement avec le modèle numérique CAO utilisé pour fabriquer la pièce. Ainsi, en utilisant des algorithmes de traitement d'image, il est aisé de pouvoir détecter et caractériser un défaut en cours de fabrication et, le cas échéant, de permettre la correction de ce défaut lors de la fabrication d'une couche suivante.

L'invention a pour objet une méthode d'inspection en 3D d'une pièce en cours de fabrication additive, la méthode comprenant les étapes itératives de :

- Fabriquer, au moyen d'un dispositif de fabrication additive, à partir d'un modèle numérique, une couche 2D de la pièce,

- Acquérir, à chaque itération, au moyen d'un dispositif d'imagerie par rayons X, au moins une image radiographique 2D de la pièce en cours de fabrication,

- Générer une image 3D de la pièce en cours de fabrication à partir de chaque image radiographique 2D acquise, en :

    i. générant, à chaque itération, une image différentielle de la couche de la pièce en cours de fabrication par soustraction entre l'image radiographique 2D acquise à l'itération courante et l'image radiographique 2D acquise à l'itération précédente,

    ii. générant l'image 3D par combinaison des images différentielles obtenues pour toutes les couches de la pièce.

- Rechercher la présence d'un défaut dans au moins une image 3D générée.

Dans une variante de réalisation particulière, la méthode selon l'invention comprend en outre les étapes de :

- si aucun défaut n'est détecté, exécuter l'itération suivante,

- si un défaut est détecté, évaluer si le défaut est corrigeable et,

- si le défaut est corrigeable, corriger le défaut lors de la fabrication de la couche 2D suivante.

Selon un aspect particulier de l'invention, le défaut est corrigé lors de la fabrication de la couche 2D suivante en modifiant le modèle numérique de la pièce à fabriquer ou en adaptant les paramètres du dispositif de fabrication additive.

Dans une variante de réalisation particulière, la méthode selon l'invention comprend en outre, à chaque itération, lorsque la position relative du dispositif d'imagerie par rapport à la pièce varie au cours de la fabrication de la pièce, une étape de correction de l'image radiographique 2D acquise à l'itération courante comprenant au moins une étape parmi :

- Une application d'un facteur d'agrandissement dépendant de ladite position relative,

- Une interpolation,

- Une correction de l'intensité des pixels de sorte à compenser la variation de la position relative.

Selon un aspect particulier de l'invention, une image radiographique 2D de la pièce est obtenue pour un angle de prise de vue et une image 3D de la pièce est générée à partir d'une image radiographique 2D de la pièce et l'angle de prise de vue associé.

Selon un aspect particulier de l'invention, à chaque itération, plusieurs images radiographiques 2D sont acquises pour des angles de prise de vue différents et la méthode comprend en outre une étape de combinaison des images 3D générées pour chaque image radiographique 2D pour générer une image 3D unique, l'étape de recherche d'un défaut étant réalisée dans l'image 3D unique.

Selon un aspect particulier de l'invention, l'étape de rechercher la présence d'un défaut dans une image 3D est réalisée par comparaison entre l'image 3D générée et le modèle numérique de la pièce.

L'invention a aussi pour objet un ensemble de fabrication et inspection d'une pièce en 3D comprenant un dispositif de fabrication additive de la pièce en 3D et un dispositif d'imagerie constitué d'au moins une source de rayons X et d'au moins un détecteur agencés pour acquérir une image radiographique 2D de la pièce en cours de fabrication, le dispositif d'imagerie étant positionné de manière à ce que, pour chaque source, la pièce soit située entre ladite source et chacun des détecteurs, ledit ensemble comprenant en outre un dispositif électronique de traitement configuré pour recevoir l'image radiographique 2D de la pièce et fournir au dispositif de fabrication additive une information caractéristique de la présence d'un défaut dans la pièce en cours de fabrication, ledit ensemble étant configuré pour inspecter en 3D la pièce au moyen du fonctionnement itératif suivant:

- Fabriquer, au moyen du dispositif de fabrication additive, à partir d'un modèle numérique, une couche 2D de la pièce,

- Acquérir à chaque itération, au moyen du dispositif d'imagerie, au moins une image radiographique 2D de la pièce en cours de fabrication,

- Générer, au moyen du dispositif électronique de traitement, une image 3D de la pièce en cours de fabrication à partir de chaque image radiographique 2D acquise en:

    i. générant, à chaque itération, une image différentielle de la couche de la pièce en cours de fabrication par soustraction entre l'image radiographique 2D acquise à l'itération courante et l'image radiographique 2D acquise à l'itération précédente,

    ii. générant l'image 3D par combinaison des images différentielles obtenues pour toutes les couches de la pièce,

- Rechercher, au moyen du dispositif électronique de traitement, la présence d'un défaut dans au moins une image 3D générée.

Selon un aspect particulier de l'invention, au moins un détecteur est positionné sous la première couche de la pièce 3D à fabriquer ou dans un plan latéral par rapport à la pièce.

Selon une variante de réalisation, l'ensemble selon l'invention comprend en outre un moyen de déplacement auquel au moins une source de rayons X est fixée solidairement de manière à pouvoir réaliser plusieurs acquisitions d'une image radiographique 2D de la pièce selon différents angles d'incidence.

Selon un aspect particulier de l'invention, au moins une source de rayons X est fixée solidairement à la tête d'impression du dispositif de fabrication additive.

Selon un aspect particulier de l'invention, le dispositif de fabrication additive est un dispositif de fusion sélective par laser SLM ou un dispositif de dépôt de matière sous énergie concentrée DED ou un dispositif de dépôt de fil métallique WAAM.

D'autres caractéristiques et avantages de la présente invention apparaîtront mieux à la lecture de la description qui suit en relation aux dessins annexés suivants.

[Fig. 1] la figure 1 représente un organigramme détaillant les étapes de mise en œuvre d'une méthode d'inspection d'une pièce en cours de fabrication selon un mode de réalisation de l'invention,

[Fig. 2] la figure 2 représente un schéma d'un système de fabrication additive et d'inspection selon un premier mode de réalisation de l'invention,

[Fig. 3] la figure 3 représente un schéma d'un système de fabrication additive et d'inspection selon un deuxième mode de réalisation de l'invention,

[Fig. 4] la figure 4 représente un schéma d'un système de fabrication additive et d'inspection selon un troisième mode de réalisation de l'invention,

[Fig. 5] la figure 5 représente un schéma d'un système de fabrication additive et d'inspection selon un quatrième mode de réalisation de l'invention,

[Fig. 6] la figure 6 représente un schéma d'un système de fabrication additive et d'inspection selon un cinquième mode de réalisation de l'invention,

[Fig. 7] la figure 7 représente un schéma d'un système de fabrication additive et d'inspection selon un sixième mode de réalisation de l'invention,

[Fig. 8] la figure 8 représente un schéma illustrant la génération d'une image 3D de la pièce en cours de fabrication,

[Fig. 9] la figure 9 représente un schéma plus complet d'un système selon l'invention basée sur une technologie SLM,

[Fig. 10] la figure 10 représente un schéma plus complet d'un système selon l'invention basée sur une technologie DED,

[Fig. 11] la figure 11 représente un schéma plus complet d'un système selon l'invention basée sur une technologie WAAM,

La figure 12 représente un premier exemple de configuration du système selon l'invention permettant de détecter un défaut dans une couche de la pièce antérieure à la couche en cours d'acquisition,

La figure 13 représente un second exemple de configuration du système selon l'invention permettant de détecter un défaut dans une couche de la pièce antérieure à la couche en cours d'acquisition.

L'invention est basée sur la combinaison d'un dispositif de fabrication additive avec un dispositif d'imagerie radiographique par rayons X pour pouvoir détecter d'éventuels défauts au cours de la fabrication d'une pièce.

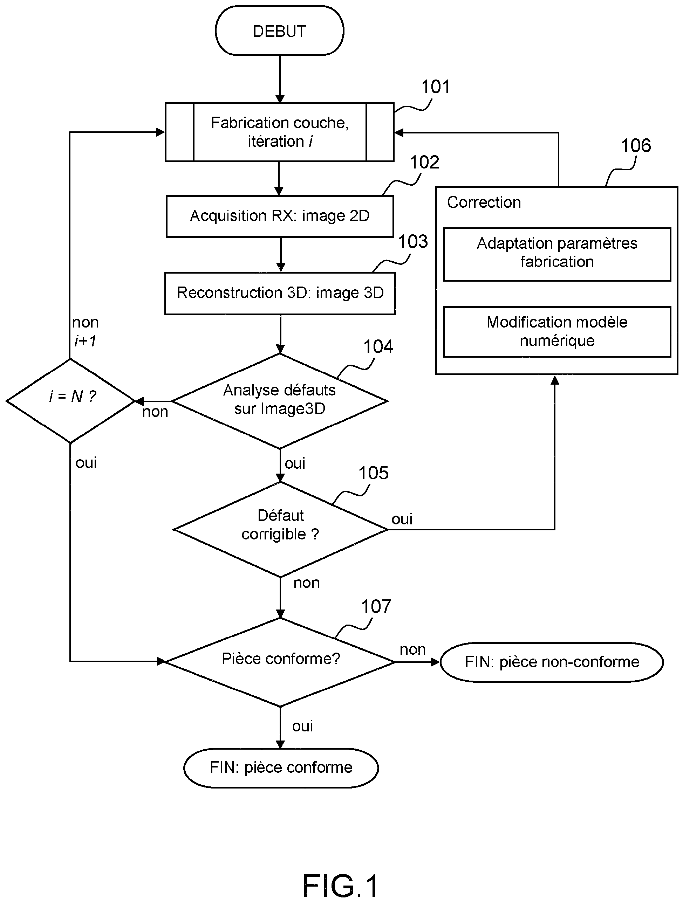

La figure 1 détaille, sur un organigramme, les étapes de mise en œuvre d'une méthode d'inspection d'une pièce en cours de fabrication selon l'invention.

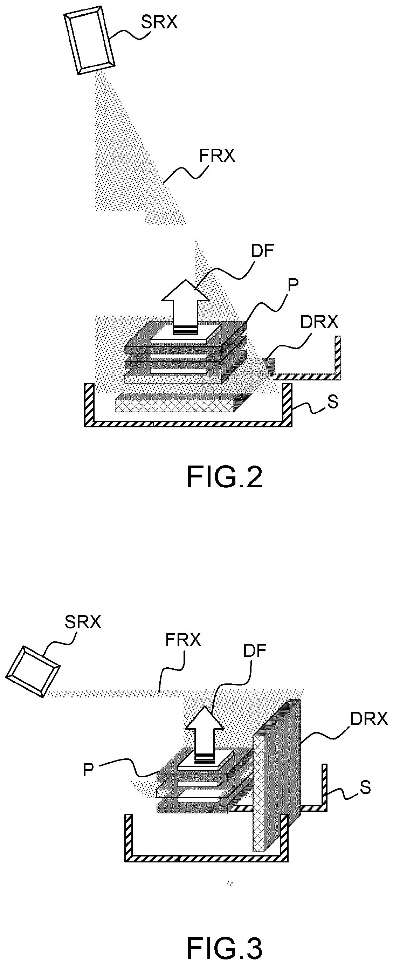

Les figures 2 à 8 illustrent différentes configurations de mise en œuvre d'un système pour mettre en œuvre l'invention.

La méthode d'inspection est itérative, en ce sens qu'elle a pour objectif de détecter, après chaque couche de l'objet fabriqué, la présence éventuelle d'un défaut de fabrication.

Ainsi, une première étape 101 du procédé consiste à fabriquer une couche d'un objet au moyen du dispositif de fabrication additive.

Ensuite, une deuxième étape 102 consiste à réaliser une acquisition d'une image radiographique 2D de l'objet partiellement fabriqué.

Pour cela on utilise un dispositif d'imagerie par rayons X constitué d'une ou plusieurs source(s) de rayons X et d'un ou plusieurs détecteur(s) numérique(s). Chaque détecteur est associé à un dispositif électronique de traitement pour réaliser l'acquisition de l'image radiographique.

Chaque source de rayons X SRX est apte à générer un faisceau de rayons X FRX pour éclairer la pièce P.

Chaque détecteur DRX est, par exemple, un détecteur plan matriciel. Il est apte à réaliser une image radiographique 2D de la pièce P à partir du faisceau de rayons X reçu.

Différentes configurations de positionnement du dispositif d'imagerie par rapport à la pièce P sont envisageables.

La figure 2 représente une source SRX positionnée au-dessus de la pièce P et éclairant la pièce avec un angle d'incidence prédéterminé avec la direction DF de fabrication de la pièce P. Par exemple, la source SRX peut être positionnée à la verticale de la pièce P dans l'axe de la direction de fabrication DF de la pièce.

Le détecteur DRX est positionné en dessous de la pièce P, c'est-à-dire en dessous de la première couche fabriquée. Par exemple, le détecteur DRX peut être positionné sur ou sous le support S de fabrication de la pièce P. Dans l'exemple de la figure 2, le détecteur DRX est ainsi positionné dans un plan perpendiculaire à la direction de fabrication. Ainsi, la pièce P peut être imagée car elle se trouve entre la source SRX et le détecteur DRX dans le cône du faisceau de rayons X.

La figure 3 représente une autre configuration de positionnement du dispositif d'imagerie. Dans cet exemple, la source SRX est positionnée sur le côté de la pièce avec un angle d'incidence non nul avec le plan perpendiculaire à la direction DF de fabrication de la pièce. Le détecteur DRX est, quant à lui, positionné verticalement et latéralement par rapport à la pièce P.

De façon générale, l'angle d'incidence de la source SRX par rapport à la direction de fabrication DF de la pièce peut être compris entre 0° et une valeur strictement inférieure à 90°. Le détecteur DRX est positionné de sorte que la pièce soit entre la source SRX et le détecteur DRX.

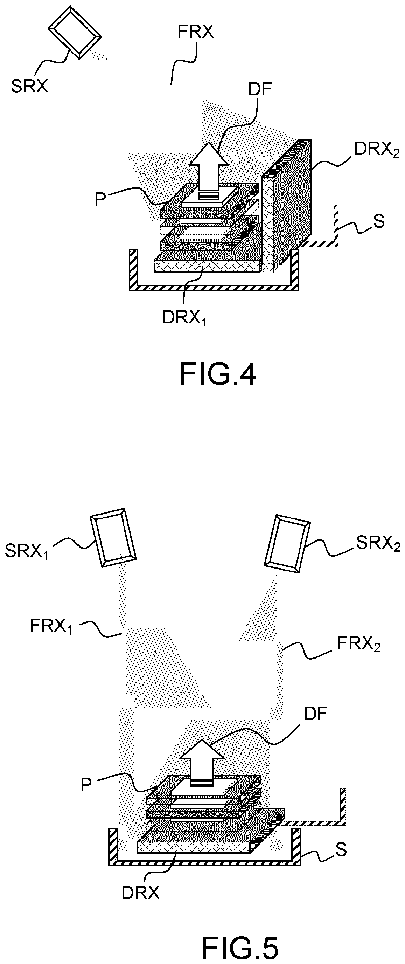

La figure 4 représente un autre exemple pour lequel deux détecteurs DRX1,DRX2 sont utilisés et positionnés perpendiculairement l'un à l'autre comme représenté sur la figure 4. Alternativement, un détecteur unique en forme de L peut être envisagé. Dans ce scénario, si deux détecteurs sont utilisés, ils produisent chacun une image radiographique 2D de la pièce P selon deux orientations différentes du faisceau FRX1,FRX2. Un avantage de cette variante est qu'elle permet d'imager des pièces de plus grandes dimensions. Un autre avantage réside dans une détection plus fine de certains types de défauts, en particulier lorsqu'il s'agit de fissures qui présentent une orientation donnée. Lorsqu'on utilise un seul détecteur associé à une seule orientation du faisceau FRX, certaines fissures peuvent ne pas être visibles sur l'image selon leur orientation par rapport au faisceau. De façon générale l'utilisation de plusieurs détecteurs permet de mieux imager des pièces de forme complexe, notamment des pièces asymétriques.

La figure 5 représente un autre exemple dans lequel deux sources SRX1,SRX2 sont utilisées avec un seul détecteur. Dans cet exemple, le détecteur DRX réalise deux acquisitions successives pour chacune des sources. Chaque source est positionnée de manière à ce que son faisceau de rayons X éclaire la pièce P avec un angle d'incidence différent.

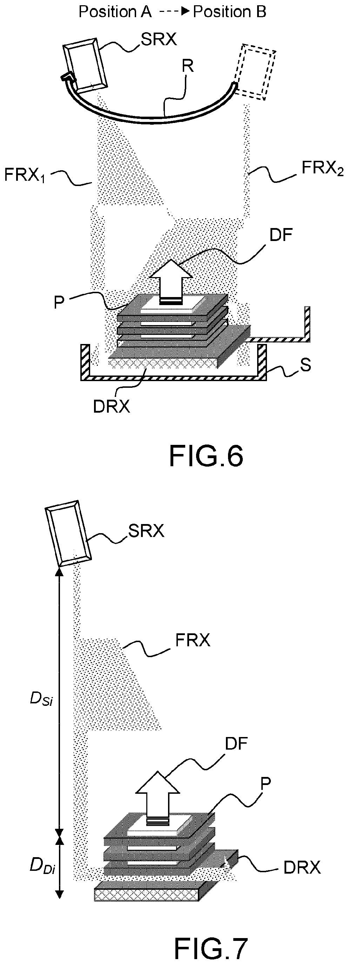

La figure 6 représente une variante de réalisation de l'exemple de la figure 5. Dans cet exemple, on utilise une seule source SRX mais celle-ci peut être déplacée pour être positionnée dans deux ou plusieurs positions différentes de sorte à réaliser plusieurs acquisitions successives avec des angles d'incidence différents. Le déplacement peut être linéaire ou circulaire, par exemple. Le système de déplacement peut être réalisé par un rail R et un moteur, la source SRX étant équipée du moteur pour permettre son déplacement sur le rail R.

Sans perte de généralité, l'invention peut être mise en œuvre avec un nombre quelconque de sources à rayons X SRX et de détecteurs DRX, de sorte à produire plusieurs images radiographiques 2D de la pièce en cours de fabrication selon différents angles d'incidence.

Pour chaque image radiographie 2D obtenue et en lui associant l'angle d'incidence connu de la source à rayons X par rapport à la pièce, une étape 103 de reconstruction en trois dimensions de la pièce est réalisée de sorte à générer une image numérique 3D de la pièce.

L'étape 103 de reconstruction consiste à assembler plusieurs images 2D dans un volume 3D. Ce volume représente la pièce inspectée P sur une grille de voxels ayant des niveaux de gris différents.

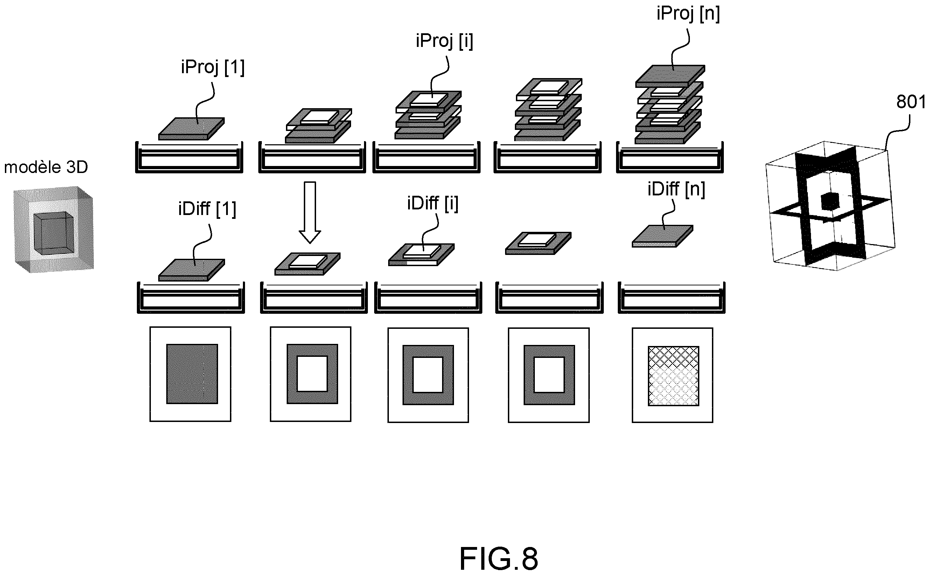

Le processus de reconstruction d'une image 3D est illustré à la figure 8.

A chaque itération i, une image radiographique est acquise, cette image incluant la contribution de l'ensemble des couches réalisées aux itérations précédentes. Pour l'itération i, on note l'image acquise iProj[i] et l'image différentielle iDiff[i].

On a iDiff[i] = iProj[i]- iProj[i-1], avec iDiff[1]=iProj[1].

L'image 3D 801 est obtenue en combinant les images différentielles iDiff[i] et en tenant compte de l'orientation du faisceau de rayons X.

La figure 8 représente très schématiquement les images 2D acquises à chaque itération iProj[i] ainsi que les images différentielles iDiff[i] selon deux orientations différentes (vue de côté et vue de dessus).

Dans le cas où plusieurs images radiographiques 2D sont acquises après l'étape 102, on obtient autant de reconstructions 3D indépendantes qui peuvent être analysées indépendamment ou recombinées afin de générer une reconstruction 3D unique qui présente alors une meilleure résolution et un meilleur rapport signal à bruit.

La figure 7 schématise un exemple de réalisation pour lequel une source SRX est positionnée de sorte à se déplacer en s'éloignant ou se rapprochant de la pièce au cours de sa fabrication. Ce cas d'application correspond notamment à une réalisation du système pour laquelle la source SRX est fixée à la tête d'impression de la machine qui se déplace en s'éloignant après chaque couche de la pièce fabriquée.

Dans ce cas, le déplacement de la source selon la direction de fabrication de la pièce implique une modification du facteur d'agrandissement à chaque itération i, défini par $G_i = (D_{Si} + D_{Di})/D_{Si}$, avec $D_{Di}$ la distance entre le détecteur plan DRX et la couche de la pièce fabriquée à l'itération i, et $D_{Si}$ la distance entre la source SRX et ladite couche.

Dans ce cas, l'étape de reconstruction d'une image 3D 103 est réalisée en appliquant un facteur d'agrandissement à l'image radiographique 2D obtenue à l'itération i et en réalisant un ré-échantillonnage adapté à l'agrandissement.

Autrement dit, l'image corrigée est obtenue par iProjG[i]= $G_1/G_1$ * iProj[i] et en utilisant une interpolation, par exemple bi-linéaire ou bi-cubique.

Par ailleurs, une correction du niveau de gris est nécessaire pour compenser la variation de distance. Cette correction peut être réalisée de la façon suivante, où iCorr[i] est l'image 2D corrigée :

[Math. 1]

$$iCorr[i] = \frac{D_{Di}^2}{D_{D1}^2} * iProjG[i]$$

L'image 3D obtenue est ensuite comparée 104 à un modèle numérique 3D de la pièce obtenu par CAO. La comparaison entre les deux représentations 3D de la pièce, est par exemple, réalisée en comparant chaque image différentielle à une image de référence correspondante obtenue à partir d'une coupe du modèle CAO tridimensionnel.

La comparaison est, par exemple réalisée, en calculant une erreur entre chaque image différentielle et chaque image de référence et en comparant cette erreur à un seuil de détection prédéterminé.

Si aucun défaut n'est détecté par l'étape 104, alors le procédé se poursuit à l'itération suivante i+1 et on retourne à l'étape 101.

Dans le cas contraire, si un défaut est détecté, on vérifie 105 si le défaut est corrigible. Si c'est le cas, on applique une étape de correction 106 à la pièce P lors de la fabrication de la couche suivante. L'étape de correction 106 est réalisée par exemple en modifiant le modèle CAO de la pièce qui sert de référence à la fabrication ou en adaptant les paramètres de fabrication. Par exemple, il est possible d'adapter la puissance du laser ou la vitesse de déplacement de la source laser pour une méthode de fabrication basée sur une technologie SLM, la puissance du laser ou le débit de poudre pour une méthode de fabrication de type DED ou bien l'intensité de l'arc électrique ou la vitesse de déplacement du fil d'apport pour une méthode de fabrication de type WAAM.

Lorsque la pièce est entièrement fabriquée ou si le défaut détecté n'est pas corrigible, on vérifie, dans une étape finale 107, si la pièce est conforme aux spécifications.

L'invention présente l'avantage de permettre l'inspection de pièces de matériaux de diverses natures. Cet avantage est notable par rapport à des méthodes d'inspection basées sur des courants de Foucault qui ne permettent pas d'imager n'importe quel type de matériau.

L'invention est applicable à tout dispositif de fabrication additive par couches successives, notamment mettant en œuvre des méthodes de type SLM, DED ou WAAM.

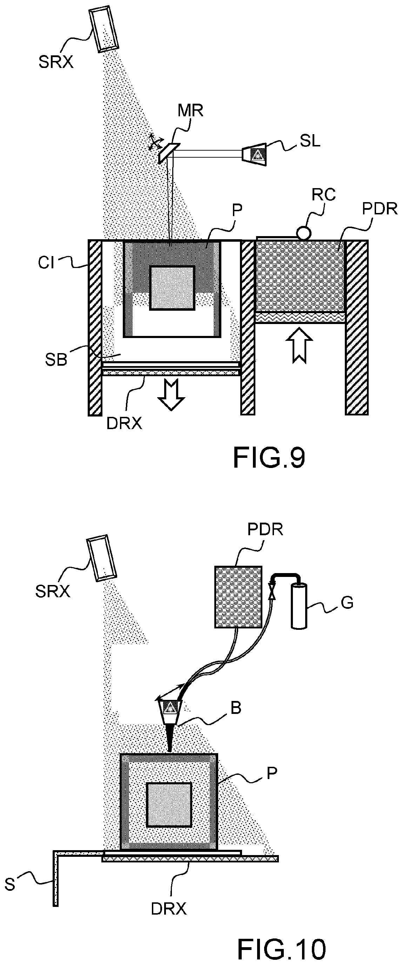

La figure 9 représente un schéma plus complet d'un système selon l'invention basé sur une technologie SLM.

La fusion sélective par laser (SLM - Selective Laser Melting) est un procédé de fabrication additive par couches successives dans lequel la matière sous forme de poudre est fondue par un faisceau laser. Pour chaque couche, une épaisseur très fine de poudre est disposée d'une manière homogène dans la cuve d'impression (« lit de poudre ») et le faisceau laser est orienté par un miroir uniquement vers les zones de rajout de matière. À la fin du processus, la pièce subit un processus de nettoyage pour retirer la poudre in-fondue. Des traitements thermiques peuvent être appliqués pour améliorer l'état de surface et pour réduire les contraintes résiduelles.

La figure 9 schématise un tel système qui comprend une cuve d'impression CI comprenant un substrat SB dans laquelle la pièce P est fabriquée. La pièce est fabriquée à partir d'un lit de poudre PDR et d'un racleur RC. Une source laser SL et un miroir rotatif MR sont agencés pour générer un faisceau laser orientable. La source à rayons X SRX est positionnée de manière à ne pas interférer avec la source laser SL ou le miroir MR. Le détecteur DRX est par exemple positionné sous le substrat S de la cuve CI. La figure 9 représente un exemple d'agencement non limitatif qui peut être modifié en tenant compte des différentes configurations du système d'imagerie par rayons X exposées précédemment.

La figure 10 représente un schéma plus complet d'un système selon l'invention basé sur une technologie DED.

La technologie DED (Directed Energy Déposition) concerne un procédé de dépôt de matière utilisant un faisceau laser pour fondre une poudre qui constitue l'apport de matière, sous forme de cordons successifs. En général, le dispositif laser et l'arrivée de la poudre sont contenues dans une buse d'impression qui se déplace en trois directions pour créer des formes géométriques complexes. Pour améliorer les performances, un gaz inerte peut être utilisé pour créer localement une atmosphère contrôlée en vue de réduire les phénomènes d'oxydation.

La figure 10 schématise un système selon l'invention compatible de la technologie DED. Le système comprend une buse d'impression B reliée à un réservoir de poudre PDR et à un réservoir de gaz inerte G. La buse B est apte à générer un faisceau laser et se déplace en trois directions pour former les couches successives de la pièce P qui est fabriquée sur un support S. Le détecteur à rayons X DRX est, par exemple placé sous le support S et la source à rayons X SRX est positionnée de sorte à ne pas interférer avec la buse B. Dans un mode de réalisation particulier, la source à rayons X SRX est fixée à la buse d'impression B.

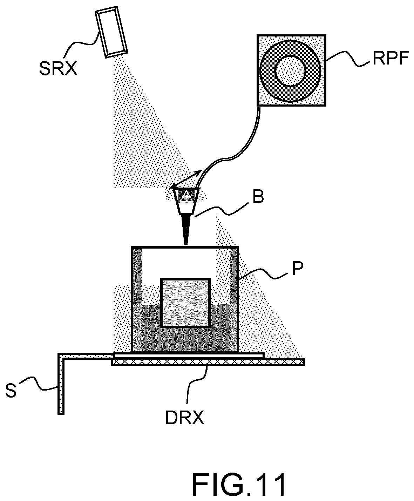

La figure 11 représente un schéma plus complet d'un système selon l'invention basé sur une technologie WAAM.

La technologie WAAM (Wire + Arc Additive Manufacturing) concerne un procédé similaire aux procédés de soudure par apport de matière. Un arc électrique est utilisé pour fondre le fil métallique qui sera déposé en cordons successifs pour créer une pièce de la forme souhaitée. Les mouvements sont assurés par des bras robotiques et un plateau support de pièce avec 1 à 6 degrés de liberté.

La figure 11 schématise un système selon l'invention compatible de la technologie WAAM. Le système comprend une buse d'impression B reliée à un réservoir de poudre ou de fil métallique. La buse B est apte à générer un faisceau laser ou un arc électrique et se déplace en trois directions pour former les couches successives de la pièce P qui est fabriquée sur un support S. Le détecteur à rayons X DRX est, par exemple placé sous le support S et la source à rayons X SRX est positionnée de sorte à ne pas interférer avec la buse B. Dans un mode de réalisation particulier, la source à rayons X SRX est fixée à la buse d'impression B.

Grâce à une reconstruction de la pièce par acquisitions successives par couches et reconstruction d'images différentielles, l'invention permet de détecter des défauts impactant également les couches antérieures à la couche en cours de fabrication.

En effet, la fabrication de la couche courante (couche $I_k$) peut parfois engendrer des déformations dans les couches antérieures, notamment la couche précédente ($I_{k-1}$) ou les quelques couches précédentes. Par exemple, le chauffage par faisceau laser ou arc électrique peut engendrer une déformation locale des couches précédentes.

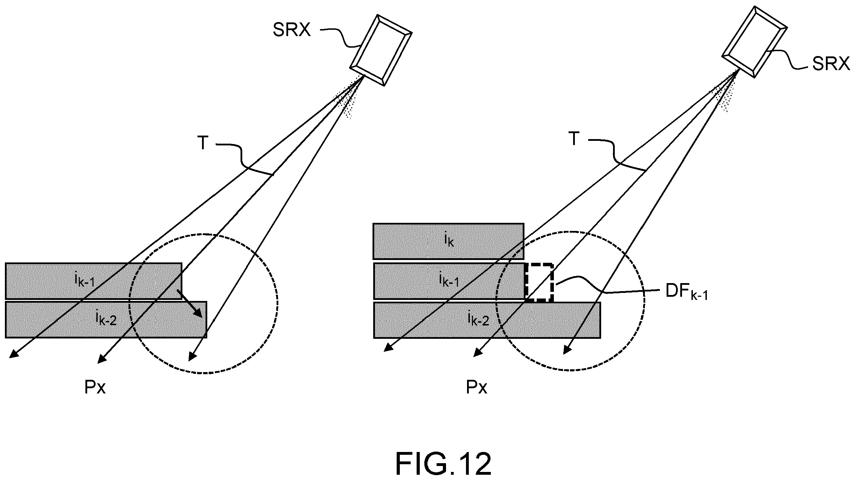

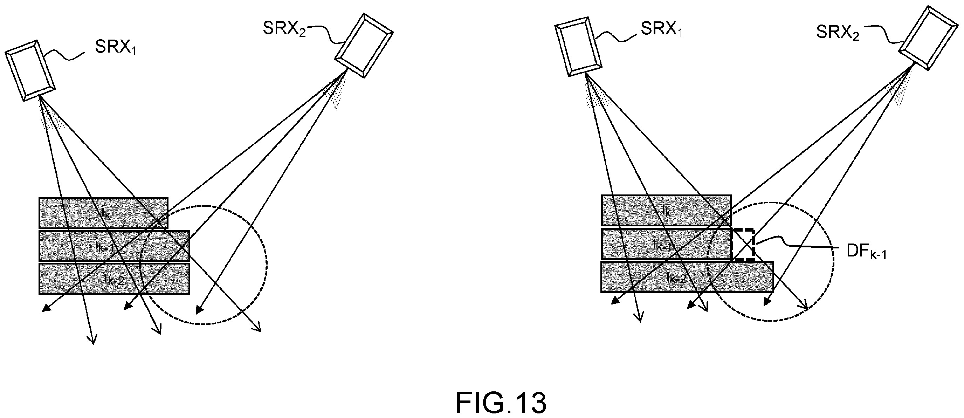

Un tel défaut peut être détecté grâce à l'invention comme décrit sur les exemples des figures 12 et 13. Ces figures représentent, schématiquement, sur la gauche, une situation où deux couches successives d'une pièce ($I_{k-1}$, $I_{k-2}$) sont fabriquées et inspectées au moyen d'une source SRX. Sur la droite des figures 12 et 13, on a représenté un cas pour lequel la fabrication de la couche suivante $I_k$ a généré un défaut $DF_{k-1}$ dans la couche précédente $I_{k-1}$, le défaut correspondant à une suppression de matière (par exemple due à un échauffement trop important) qui est déplacée vers une couche inférieure.

Dans l'exemple de la figure 12, le trajet T détecté par le pixel Px va fournir une valeur différente à l'itération k-1 et à l'itération k, alors que ce trajet n'intercepte pas la couche k. Une corrélation avec la géométrie de la pièce à partir de son modèle numérique, permet de déduire si la différence mesurée provient d'un défaut ou d'une déformation dans une ou plusieurs couches antérieures.

En exploitant les images 2D acquises aux itérations précédentes et en comparant les pixels de ces images aux valeurs acquises pour l'image 2D à l'itération courante k, on peut détecter des changements de valeurs de pixels correspondant à des défauts dans les couches précédentes.

Pour permettre d'augmenter les configurations de défaut qui sont détectables par cette méthode, dans un mode de réalisation de l'invention décrit à la figure 13, plusieurs sources $SRX_1$,$SRX_2$ sont disposées autour de la pièce avec des orientations différentes par rapport à la pièce (tel que décrit dans les différentes variantes précédentes).

Dans l'exemple de la figure 13, le défaut DFk-1 est détectable par la source $SRX_2$ mais pas par la source $SRX_1$.

En résumé, dans une variante de réalisation de l'invention, les étapes de traitement suivantes sont exécutées dans le but de détecter un éventuel défaut dans une couche antérieure à la couche courante. Ces étapes sont mises en œuvre pour chaque image radiographique 2D acquise au moyen d'un couple (détecteur, source SRX).

A partir d'informations caractérisant la géométrie globale de la pièce, notamment les dimensions de la couche en cours de fabrication $I_k$, on identifie les pixels Px du détecteur dont les valeurs ne doivent pas être différentes par rapport à l'image 2D acquise à l'itération précédente $I_{k-1}$. Ces pixels correspondent à ceux pour lesquels le trajet entre la source SRX et le pixel Px du détecteur n'interceptent pas, a priori et selon la connaissance des dimensions de la pièce, la couche en cours de fabrication $I_k$.

Ensuite, pour les pixels identifiés, on vérifie si leurs valeurs dans l'image 2D acquise à l'itération courante présentent un écart important avec les valeurs correspondantes dans l'image 2D acquise à l'itération précédente.

Si une différence de valeurs est détectée, alors on en déduit un défaut dans la zone de la pièce correspondant à l'interception entre le trajet (source, pixel) et la pièce.

Ainsi, contrairement aux méthodes connues, notamment par laminographie ou tomographie, l'invention permet de détecter la présence de défauts également dans les couches antérieures à la couche en cours de fabrication, tout en utilisant un nombre d'images bien inférieur comme données d'entrée de la méthode.

## Revendications

1. Méthode d'inspection en 3D d'une pièce (P) en cours de fabrication additive, la méthode comprenant les étapes itératives de :

   - Fabriquer (101), au moyen d'un dispositif de fabrication additive, à partir d'un modèle numérique, une couche 2D de la pièce,
   - Acquérir (102), à chaque itération, au moyen d'un dispositif d'imagerie par rayons X, au moins une image radiographique 2D de la pièce en cours de fabrication,
   - Générer (103) une image 3D de la pièce en cours de fabrication à partir de chaque image radiographique 2D acquise en :

> i. générant, à chaque itération, une image différentielle de la couche de la pièce en cours de fabrication par soustraction entre l'image radiographique 2D acquise à l'itération courante et l'image radiographique 2D acquise à l'itération précédente,
> ii. générant l'image 3D par combinaison des images différentielles obtenues pour toutes les couches de la pièce,

> - Rechercher (104) la présence d'un défaut dans au moins une image 3D générée.

2. Méthode d'inspection en 3D d'une pièce selon la revendication 1 comprenant en outre les étapes de :

> - si aucun défaut n'est détecté, exécuter l'itération suivante,
> - si un défaut est détecté, évaluer (105) si le défaut est corrigeable et,
> - si le défaut est corrigeable, corriger (106) le défaut lors de la fabrication de la couche 2D suivante.

3. Méthode d'inspection en 3D d'une pièce selon la revendication 2 dans lequel le défaut est corrigé (106) lors de la fabrication de la couche 2D suivante en modifiant le modèle numérique de la pièce à fabriquer ou en adaptant les paramètres du dispositif de fabrication additive.

4. Méthode d'inspection en 3D d'une pièce selon l'une quelconque des revendications précédentes comprenant en outre, à chaque itération, lorsque la position relative du dispositif d'imagerie par rapport à la pièce varie au cours de la fabrication de la pièce, une étape de correction de l'image radiographique 2D acquise à l'itération courante comprenant au moins une étape parmi :

> - Une application d'un facteur d'agrandissement dépendant de ladite position relative,
> - Une interpolation,
> - Une correction de l'intensité des pixels de sorte à compenser la variation de la position relative.

5. Méthode d'inspection en 3D d'une pièce selon l'une des revendications précédentes dans laquelle une image radiographique 2D de la pièce est obtenue pour un angle de prise de vue et une image 3D de la pièce est générée à partir d'une image radiographique 2D de la pièce et l'angle de prise de vue associé.

6. Méthode d'inspection en 3D d'une pièce selon la revendication 5 dans laquelle, à chaque itération, plusieurs images radiographiques 2D sont acquises pour des angles de prise de vue différents et la méthode comprend en outre une étape de combinaison des images 3D générées pour chaque image radiographique 2D pour générer une image 3D unique, l'étape de recherche d'un défaut étant réalisée dans l'image 3D unique.

7. Méthode d'inspection en 3D d'une pièce selon l'une quelconque des revendications précédentes dans lequel l'étape de rechercher (104) la présence d'un défaut dans une image 3D est réalisée par comparaison entre l'image 3D générée et le modèle numérique de la pièce.

8. Méthode d'inspection en 3D d'une pièce selon l'une quelconque des revendications précédentes comprenant en outre les étapes suivantes, pour chaque image radiographique 2D acquise :

> - Identifier, à partir d'informations a priori sur la géométrie de la pièce, les pixels de l'image radiographique 2D dont la valeur ne doit pas changer par rapport à l'image radiographique 2D acquise à l'itération précédente,
> - Pour chaque pixel identifié, évaluer si sa valeur a été modifiée par rapport à l'itération précédente,
> - En déduire la présence d'un défaut dans une couche de la pièce fabriquée lors d'une itération précédente.

9. Ensemble de fabrication et inspection d'une pièce en 3D comprenant un dispositif de fabrication additive de la pièce en 3D et un dispositif d'imagerie constitué d'au moins une source de rayons X (SRX1, SRX2) et d'au moins un détecteur (DRX1,DRX2) agencés pour acquérir une image radiographique 2D de la pièce (P) en cours de fabrication, le dispositif d'imagerie étant positionné de manière à ce que, pour chaque source (SRX1,SRX2), la pièce soit située entre ladite source (SRX1,SRX2) et chacun des détecteurs (DRX1,DRX2), ledit ensemble comprenant en outre un dispositif électronique de traitement configuré pour recevoir l'image radiographique 2D de la pièce et fournir au dispositif de fabrication additive une information caractéristique de la présence d'un défaut dans la pièce en cours de fabrication, ledit ensemble étant configuré pour inspecter en 3D la pièce au moyen du fonctionnement itératif suivant:

> - Fabriquer, au moyen du dispositif de fabrication additive, à partir d'un modèle numérique, une couche 2D de la pièce,
> - Acquérir à chaque itération, au moyen du dispositif d'imagerie, au moins une image radiographique 2D de la pièce en cours de fabrication,
> - Générer, au moyen du dispositif électronique de traitement, une image 3D de la pièce en cours de fabrication à partir de chaque image radiographique 2D acquise en :

 i. générant, à chaque itération, une image différentielle de la couche de la pièce en cours de fabrication par soustraction entre l'image radiographique 2D acquise à l'itération courante et l'image radiographique 2D acquise à l'itération précédente,

 ii. générant l'image 3D par combinaison des images différentielles obtenues pour toutes les couches de la pièce,

- Rechercher, au moyen du dispositif électronique de traitement, la présence d'un défaut dans au moins une image 3D générée.

10. Ensemble de fabrication et inspection d'une pièce selon la revendication 9 dans lequel au moins un détecteur (DRX1,DRX2) est positionné sous la première couche de la pièce 3D à fabriquer ou dans un plan latéral par rapport à la pièce.

11. Ensemble de fabrication et inspection d'une pièce selon l'une des revendications 9 ou 10 comprenant en outre un moyen de déplacement (R) auquel au moins une source de rayons X (SRX) est fixée solidairement de manière à pouvoir réaliser plusieurs acquisitions d'une image radiographique 2D de la pièce (P) selon différents angles d'incidence.

12. Ensemble de fabrication et inspection d'une pièce selon l'une des revendications 9 à 11 dans lequel au moins une source de rayons X (SRX) est fixée solidairement à la tête d'impression (B) du dispositif de fabrication additive.

13. Ensemble de fabrication et inspection d'une pièce selon l'une des revendications 9 à 12 dans lequel le dispositif de fabrication additive est un dispositif de fusion sélective par laser ou un dispositif de dépôt de matière sous énergie concentrée ou un dispositif de dépôt de fil métallique.

**Patentansprüche**

1. Verfahren zur 3D-Inspektion eines in additiver Fertigung befindlichen Teils (P), wobei das Verfahren folgende iterativen Schritte umfasst:

 - Fertigen (101), mithilfe einer Vorrichtung zur additiven Fertigung, anhand eines digitalen Modells, einer 2D-Schicht des Teils,

 - Erfassen (102), bei jeder Iteration, mithilfe einer Röntgen-Bildgebungsvorrichtung, mindestens eines 2D-Durchstrahlungsbildes des in Fertigung befindlichen Teils,

 - Erzeugen (103) eines 3D-Bildes des in Fertigung befindlichen Teils anhand eines jeden 2D-Durchstrahlungsbildes, welches erfasst wird durch:

  i. Erzeugen, bei jeder Iteration, eines Differenzialbildes der Schicht des in Fertigung befindlichen Teils durch Subtraktion, zwischen dem bei der laufenden Iteration erfassten 2D-Durchstrahlungsbild, und dem bei der vorherigen Iteration erfassten 2D-Durchstrahlungsbild,

  ii. Erzeugen des 3D-Bildes durch Kombination der für sämtliche Schichten des Teils erzielten Differenzialbilder,

 - Suchen (104) nach dem Vorliegen eines Fehlers in mindestens einem erzeugten 3D-Bild.

2. Verfahren zur 3D-Inspektion eines Teils nach Anspruch 1, ferner umfassend die folgenden Schritte:

 - wenn kein Fehler detektiert wird, Ausführen der folgenden Iteration,

 - wenn ein Fehler detektiert wird, Bewerten (105), ob sich der Fehler korrigieren lässt, und,

 - wenn sich der Fehler korrigieren lässt, Korrigieren (106) das Fehlers während der Fertigung der folgenden 2D-Schicht.

3. Verfahren zur 3D-Inspektion eines Teils nach Anspruch 2, wobei der Fehler während der Fertigung der folgenden 2D-Schicht korrigiert wird (106), indem das digitale Modell des zu fertigenden Teils modifiziert wird oder indem die Parameter der additiven Fertigungsvorrichtung angepasst werden.

4. Verfahren zur 3D-Inspektion eines Teils nach einem der vorhergehenden Ansprüche, ferner umfassend, bei jeder Iteration, wenn die relative Position der Bildgebungsvorrichtung in Bezug auf das Teil im Zuge der Fertigung des Teils variiert, einen Schritt des Korrigierens des 2D-Durchstrahlungsbildes, welches bei der laufenden Iteration erfasst wurde, mindestens einen der folgenden Schritte umfassend:

 - Anwendung eines Vergrößerungsfaktors, welcher von der relativen Position abhängt,

 - Interpolierung,

 - Korrektur der Intensität der Pixel, um die Variation der relativen Position zu kompensieren.

5. Verfahren zur 3D-Inspektion eines Teils nach einem der vorhergehenden Ansprüche, wobei ein 2D-Durchstrahlungsbild des Teils bei einem Aufnahmewinkel erzielt wird und ein 3D-Bild des Teils anhand eines 2D-Durchstrahlungsbildes des Teils und des zugeordneten Aufnahmewinkels erzeugt wird.

**6.** Verfahren zur 3D-Inspektion eines Teils nach Anspruch 5, wobei, bei jeder Iteration, mehrere 2D-Durchstrahlungsbilder bei unterschiedlichen Aufnahmewinkeln erfasst werden, und das Verfahren ferner einen Schritt der Kombination der für jedes 2D-Durchstrahlungsbild erzeugten 3D-Bilder umfasst, um ein einziges 3D-Bild zu erzeugen, wobei der Schritt der Suche nach einem Fehler in dem einzigen 3D-Bild durchgeführt wird.

**7.** Verfahren zur 3D-Inspektion eines Teils nach einem der vorhergehenden Ansprüche, wobei der Schritt der Suche (104) nach dem Vorliegen eines Fehlers in einem 3D-Bild durch einen Vergleich zwischen dem erzeugten 3D-Bild und dem digitalen Modell des Teils durchgeführt wird.

**8.** Verfahren zur 3D-Inspektion eines Teils nach einem der vorhergehenden Ansprüche, ferner umfassend folgende Schritte, für jedes erfasste 2D-Durchstrahlungsbild:

- Identifizieren, anhand von a priori-Informationen zur Geometrie des Teils, der Pixel des 2D-Durchstrahlungsbildes, deren Wert sich nicht in Bezug auf das bei der vorherigen Iteration erfasste 2D-Durchstrahlungsbild ändern soll,
- für jeden identifizierten Pixel, Bewerten, ob sein Wert in Bezug auf die vorherige Iteration modifiziert wurde,
- daraus Ableiten des Vorliegens eines Fehlers in einer bei einer vorherigen Iteration gefertigten Schicht des Teils.

**9.** Anordnung zur Fertigung und zur Inspektion eines 3D-Teils, umfassend eine Vorrichtung zur additiven Fertigung des 3D-Teils und eine Bildgebungsvorrichtung, bestehend aus mindestens einer Röntgenstrahlenquelle (SRX1, SRX2) und mindestens einem Detektor (DRX1, DRX2), welche angeordnet sind, um ein 2D-Durchstrahlungsbild des in Fertigung befindlichen Teils (P) zu erfassen, wobei die Bildgebungsvorrichtung so positioniert ist, dass für jede Quelle (SRX1, SRX2) das Teil zwischen der Quelle (SRX1, SRX2) und jedem der Detektoren (DRX1, DRX2) positioniert ist, wobei die Anordnung ferner eine elektronische Verarbeitungsvorrichtung umfasst, welche konfiguriert ist, um das 2D-Durchstrahlungsbild des Teils zu empfangen und dem additiven Fertigungssystem eine Information bereitzustellen, welche charakteristisch für das Vorliegen eines Fehlers in dem in Fertigung befindlichen Teil ist, wobei die Anordnung konfiguriert ist, um das Teil einer 3D-Inspektion mithilfe folgender iterativer Funktionsweise zu unterziehen:

- Fertigen, mithilfe der Vorrichtung zur additiven Fertigung, anhand eines digitalen Modells, einer 2D-Schicht des Teils,
- Erfassen, bei jeder Iteration, mithilfe der Bildgebungsvorrichtung, mindestens eines 2D-Durchstrahlungsbildes des in Fertigung befindlichen Teils,
- Erzeugen, mithilfe der elektronischen Verarbeitungsvorrichtung, eines 3D-Bildes des in Fertigung befindlichen Teils anhand eines jeden 2D-Durchstrahlungsbildes, welches erfasst wird durch:

i. Erzeugen, bei jeder Iteration, eines Differenzialbildes der Schicht des in Fertigung befindlichen Teils durch Subtraktion, zwischen dem bei der laufenden Iteration erfassten 2D-Durchstrahlungsbild, und dem bei der vorherigen Iteration erfassten 2D-Durchstrahlungsbild,
ii. Erzeugen des 3D-Bildes durch Kombination der für sämtliche Schichten des Teils erzielten Differenzialbilder,

- Suchen, mithilfe der elektronischen Verarbeitungsvorrichtung, nach dem Vorliegen eines Fehlers in mindestens einem erzeugten 3D-Bild.

**10.** Anordnung zur Fertigung und Inspektion eines Teils nach Anspruch 9, wobei mindestens ein Detektor (DRX1, DRX2) unter der ersten Schicht des zu fertigenden 3D-Teils oder in einer Ebene seitlich zum Teil positioniert ist.

**11.** Anordnung zur Fertigung und Inspektion eines Teils nach einem der Ansprüche 9 oder 10, ferner umfassend ein Mittel zur Verschiebung (R), an welchem mindestens eine Röntgenstrahlenquelle (SRX) fest verbunden ist, um mehrere Erfassungen eines 2D-Durchstrahlungsbildes des Teils (P) mit unterschiedlichen Einfallwinkeln vorzunehmen.

**12.** Anordnung zur Fertigung und Inspektion eines Teils nach einem der Ansprüche 9 bis 11, wobei mindestens eine Röntgenstrahlenquelle (SRX) fest mit dem Druckkopf (B) der additiven Fertigungsvorrichtung verbunden ist.

**13.** Anordnung zur Fertigung und Inspektion eines Teils nach einem der Ansprüche 9 bis 12, wobei die additive Fertigungsvorrichtung eine selektive Laser-Schmelzvorrichtung oder eine Vorrichtung zur Ablagerung von Material unter konzentrierter Energie oder eine Vorrichtung zur Ablagerung von Metalldraht ist.

## Claims

1. A method for 3D inspection of a part (P) during additive manufacturing, the method comprising the iterative steps of:

   - manufacturing (101) a 2D layer of the part, by means of an additive manufacturing device on the basis of a digital model,
   - acquiring (102), for each iteration and by means of an X-ray imaging device, at least one 2D radiographic image of the part being manufactured,
   - generating (103) a 3D image of the part being manufactured on the basis of each acquired 2D radiographic image by:

     i. generating, for each iteration, a differential image of the layer of the part being manufactured by subtracting between the 2D radiographic image acquired during the current iteration and the 2D radiographic image acquired during the previous iteration,
     ii. generating the 3D image by combining the differential images obtained for all the layers of the part;

   - searching (104) for the presence of a defect in at least one generated 3D image.

2. The method for 3D inspection of a part according to claim 1, further comprising the steps of:

   - executing the next iteration if no defect is detected,
   - assessing (105), if a defect is detected, whether the defect can be corrected, and
   - correcting (106), if the defect can be corrected, the defect when manufacturing the next 2D layer.

3. The method for 3D inspection of a part according to claim 2, wherein the defect is corrected (106) when manufacturing the next 2D layer by modifying the digital model of the part to be manufactured or by adapting the parameters of the additive manufacturing device.

4. The method for 3D inspection of a part according to any one of the preceding claims, further comprising, for each iteration, when the relative position of the imaging device relative to the part varies when manufacturing the part, a step of correcting the 2D radiographic image acquired during the current iteration comprising at least one of the steps of:

   - applying a magnification factor dependent on said relative position,

   - interpolating,
   - correcting the intensity of the pixels so as to compensate for the variation of the relative position.

5. The method for 3D inspection of a part according to any of the preceding claims, wherein a 2D radiographic image of the part is obtained for an image capturing angle and a 3D image of the part is generated on the basis of a 2D radiographic image of the part and the associated image capturing angle.

6. The method for 3D inspection of a part according to claim 5, wherein, for each iteration, several 2D radiographic images are acquired for different image capturing angles and the method further comprises a step of combining the generated 3D images for each 2D radiographic image in order to generate a single 3D image, with the step of searching for a defect being carried out in the single 3D image.

7. The method for 3D inspection of a part according to any one of the preceding claims, wherein the step of searching (104) for the presence of a defect in a 3D image is carried out by comparing between the generated 3D image and the digital model of the part.

8. The method for 3D inspection of a part according to any one of the preceding claims, further comprising the following steps, for each acquired 2D radiographic image:

   - identifying, on the basis of a priori information on the geometry of the part, the pixels of the 2D radiographic image, the value of which must not change relative to the 2D radiographic image acquired during the previous iteration,
   - assessing, for each identified pixel, whether its value has been modified relative to the previous iteration,
   - deducing the presence of a defect in a layer of the part manufactured during a previous iteration.

9. An assembly for manufacturing and inspecting a part in 3D comprising a device for the additive manufacturing of the part in 3D and an imaging device made up of at least one X-ray source (SRX1, SRX2) and at least one detector (DRX1, DRX2) arranged to acquire a 2D radiographic image of the part (P) being manufactured, the imaging device being positioned so that, for each source (SRX1, SRX2), the part is located between said source (SRX1 , SRX2) and each of the detectors (DRX1, DRX2), said assembly further comprising an electronic processing device configured to receive the 2D radiographic image of the part and to provide the additive manufacturing device with information that is characteristic of the presence of a defect in the part being manufactured, said assembly being configured to inspect the part in 3D by means of the following iterative means:

- manufacturing a 2D layer of the part, by means of an additive manufacturing device on the basis of a digital model,
- acquiring, for each iteration and by means of the imaging device, at least one 2D radiographic image of the part being manufactured,
- generating, by means of the electronic processing device, a 3D image of the part being manufactured on the basis of each acquired 2D radiographic image by:

    i. generating, for each iteration, a differential image of the layer of the part being manufactured by subtracting between the 2D radiographic image acquired during the current iteration and the 2D radiographic image acquired during the previous iteration,
    ii. generating the 3D image by combining the differential images obtained for all the layers of the part,

- searching, by means of the electronic processing device, for the presence of a defect in at least one generated 3D image.

10. The assembly for manufacturing and inspecting a part according to claim 9, wherein at least one detector (DRX1, DRX2) is positioned under the first layer of the 3D part to be manufactured or in a lateral plane relative to the part.

11. The assembly for manufacturing and inspecting a part according to any of claims 9 or 10, further comprising a movement means (R), to which at least one X-ray source (SRX) is rigidly fixed, so as to be able to carry out several acquisitions of a 2D X-ray image of the part (P) at different angles of incidence.

12. The assembly for manufacturing and inspecting a part according to any of claims 9 to 11, wherein at least one X-ray source (SRX) is rigidly fixed to the printing head (B) of the additive manufacturing device.

13. The assembly for manufacturing and inspecting a part according to any of claims 9 to 12, wherein the additive manufacturing device is a selective laser melting device or a directed energy material deposition device or a wire arc deposition device.

FIG.1

FIG.2

FIG.3

FIG.4

FIG.5

16

Position A ---► Position B

FIG.6

FIG.7

FIG.8

EP 3 831 577 B1

FIG.9

FIG.10

FIG.11

FIG.12

EP 3 831 577 B1

FIG.13

## RÉFÉRENCES CITÉES DANS LA DESCRIPTION

**Documents brevets cités dans la description**

- WO 2018234331 A
- US 20160339519 A
- EP 3323617 A
- EP 3269535 A
- US 2019193156 A